# EUROPÄISCHE PATENTSCHRIFT

(11) **EP 3 717 863 B1**
(45) Veröffentlichungstag und Bekanntmachung des Hinweises auf die Patenterteilung: **12.01.2022**
(21) Anmeldenummer: 18829182.7
(22) Anmeldetag: 29.11.2018
(51) Int. Cl.: G01B 11/00, F02M 35/10, F16L 13/14

(54) **VERFAHREN ZUR POSITIONIERUNG VON MESSSTELLEN AN EINEM BEWEGTEN GEGENSTAND**
METHOD FOR POSITIONING MEASUREMENT POINTS ON A MOVING OBJECT
PROCÉDÉ PERMETTANT DE POSITIONNER DES POINTS DE MESURE SUR UN OBJET MOBILE

(30) Priorität: 30.11.2017 AT 509912017
(43) Veröffentlichungstag der Anmeldung: 07.10.2020
(73) Patentinhaber: Henn GmbH & Co KG., 6850 Dornbirn (AT)
(72) Erfinder: MOOSBRUGGER, Christian, 6870 Bezau (AT); GRAZIADEI, Thomas, 6850 Dornbirn (AT)
(74) Vertreter: Burger, Hannes
(86) Internationale Anmeldenummer: PCT/AT2018/060280
(87) Internationale Veröffentlichungsnummer: WO 2019/104363

(56) Entgegenhaltungen:
- EP-A1- 2 364 790
- EP-A1- 3 106 242
- WO-A1-2016/176704
- WO-A1-2017/193145

## Beschreibung

Die Erfindung betrifft ein Verfahren zur Positionierung von Messvorrichtungen und deren Messstellen oder Messfenstern bezüglich eines an einem Gegenstand örtlich festgelegten Merkmals.

Die AT 516 707 A4 der gleichen Anmelderin beschreibt ein Verfahren zum Verbinden eines Rohres mit einem Steckverbinder, bei dem ein Rohr zwischen einem ersten Mantelabschnitt und einem zweiten Mantelabschnitt geklemmt wird. Dabei wird der erste Mantelabschnitt des Steckverbinders mittels eines Presswerkzeugs verformt. Zur Kontrolle wird die während des Pressvorgangs am Presswerkzeug anliegende Presskraft erfasst und aus dem Verfahrweg des Presswerkzeugs sowie der Presskraft ein Presskraftanstieg pro Wegeinheit berechnet. Der berechnete Presskraftanstieg wird mit einem mindestens erforderlichen Presskraftanstieg pro Wegeinheit verglichen. Bei einem Unterschreiten des mindestens erforderlichen Presskraftanstiegs pro Wegeinheit wird der Steckverbinder als fehlerhaft erkannt und kann ausgeschieden werden.

Ein ähnliches Verfahren ist in WO 2017/193145 A1 offenbart.

Aufgabe der vorliegenden Erfindung war es, ein Verfahren zur Verfügung zu stellen, mittels derer ein Benutzer in der Lage ist, an einem bewegten Objekt oder einem bewegten Gegenstand mit mehreren Störkonturen im Nahbereich eines zuvor festgelegten Merkmals dieses sicher erfassen zu können und an zumindest einer davon beabstandet angeordneten Messstelle oder einem Messfenster einen positioniert ausgerichteten sicheren und ordnungsgemäßen Messvorgang durchführen zu können.

Diese Aufgabe wird durch ein Verfahren gemäß den Ansprüchen gelöst.

Das erfindungsgemäße Verfahren dient zur Positionierung zumindest einer ersten Messstelle oder eines ersten Messfensters einer ersten Messvorrichtung bezüglich eines an einem Gegenstand örtlich festgelegten Merkmals. Der Gegenstand mitsamt seinem daran angeordneten oder ausgebildeten Merkmal ist dabei nicht ortsfest, sondern bewegt sich entlang eines Verstellwegs. Bei diesem Verfahren sind zumindest folgende Schritte durchzuführen:
- Ausbilden zumindest eines ersten optischen Erfassungsbereichs, mittels welchem zumindest einen ersten optischen Erfassungsbereich die aktuelle Ist Lage des am Gegenstand festgelegten Merkmals innerhalb des zumindest einen ersten optischen Erfassungsbereichs erfasst wird,
- positioniertes Anordnen der zumindest einen ersten Messstelle oder des zumindest einen ersten Messfensters in einem vorbestimmten fixen ersten Abstand bezüglich der aktuell ermittelten Ist Lage des am Gegenstand festgelegten Merkmals,
- Durchführen zumindest eines Messvorgangs am Gegenstand an der zuvor positionierten zumindest einen ersten Messstelle oder dem zuvor positionierten zumindest einen ersten Messfenster mittels der ersten Messvorrichtung, und dabei
- zumindest ein zweiter optischer Erfassungsbereich ausgebildet wird,
- der zumindest eine zweite optische Erfassungsbereich dem zumindest einen ersten optischen Erfassungsbereich in Bewegungsrichtung des Gegenstandes nachgeordnet wird,
- der zumindest eine erste optische Erfassungsbereich und der zumindest eine zweite optische Erfassungsbereich einander überdeckend angeordnet werden und dabei zwischen diesen ein Überdeckungsabschnitt ausgebildet wird,
- eine zweite Messvorrichtung mit zumindest einer zweiten Messstelle oder mit zumindest einem zweiten Messfenster bereitgestellt wird und die zumindest eine zweite Messstelle oder das zumindest eine zweite Messfenster in einem vorbestimmten fixen zweiten Abstand bezüglich des am Gegenstand festgelegten Merkmals angeordnet wird,
- beim Erfassen der Ist Lage des am Gegenstand festgelegten Merkmals innerhalb des Überdeckungsabschnitts zwischen dem zumindest einen ersten optischen Erfassungsbereich und dem zumindest einen zweiten optischen Erfassungsbereich die erste Messvorrichtung mit deren zumindest einen ersten Messstelle oder deren zumindest einen ersten Messfenster deaktiviert wird und weiters
- Durchführen zumindest eines weiteren Messvorgangs am Gegenstand an der zuvor positionierten zumindest einen zweiten Messstelle oder dem zuvor positionierten zumindest einen zweiten Messfenster mittels der zweiten Messvorrichtung.

Vorteilhaft ist bei diesem Vorgehen, dass so in einem noch geringeren optischen Erfassungsbereich, nämlich dem Überdeckungsabschnitt, durch ein Umschalten von einer Messvorrichtung mit deren Messstelle auf eine weitere Messvorrichtung mit einer weiteren anderen Messstelle Messungen mit hoher Präzision durchgeführt werden können. Durch die Überlagerung und Überdeckung der Erfassungsbereiche oder der Erfassungsabschnitte zur aktuellen Positionsfeststellung des ausgewählten und vorbestimmten Merkmals am Gegenstand, können so benachbart dem Merkmal angeordnete, mögliche Störkonturen ausgeblendet werden. Damit wird es auch möglich, kleine oder schwach ausgeprägte Merkmale am Gegenstand als zu erfassenden Bezugspunkt für die Positionierung der Messfenster auszuwählen. Weiters kann damit aber auch die Position des jeweiligen Merkmals in Echtzeit mitverfolgt werden. Weiters ist damit aber auch bedingt durch die ständige Erfassung des Merkmals jederzeit eine Plausibilitätsprüfung möglich.

Weiters ist ein Vorgehen vorteilhaft, bei dem der vorbestimmte fixe erste Abstand als auch der vorbestimmte fixe zweite Abstand am Beginn des Erfassungsvorgangs bezüglich des am Gegenstand festgelegten Merkmals zueinander gleich ausgewählt werden. Damit kann rasch ein Umschaltvorgang zwischen dem ersten und dem zweiten Messfenster bei Erfassung des Merkmals innerhalb des Überdeckungsabschnitts durchgeführt werden.

Eine weitere vorteilhafte Vorgehensweise ist dadurch gekennzeichnet, dass die zumindest eine erste Messstelle oder das zumindest eine erste Messfenster während der Verstellbewegung entlang des Verstellwegs ständig in dem vorbestimmten fixen ersten Abstand von dem am Gegenstand festgelegten Merkmal mitbewegt wird. Durch das ständige Mitbewegen wird so das jeweilige Messobjekt von der ersten Messstelle oder dem ersten Messfenster erfasst und es können ständig Messvorgänge durchgeführt werden.

Vorteilhaft ist auch eine Verfahrensvariante, bei welcher die zumindest eine zweite Messstelle oder das zumindest eine zweite Messfenster während der Verstellbewegung entlang des Verstellwegs ständig in dem vorbestimmten fixen zweiten Abstand von dem am Gegenstand festgelegten Merkmal mitbewegt wird. Damit kann aber auch eine ständige Messfolge an der zumindest einen zweiten Messstelle während der Verstellbewegung des Merkmals innerhalb des Überdeckungsabschnitts sowie in dem nachfolgenden, zweiten optischen Erfassungsbereich durchgeführt werden.

Eine andere Vorgehensweise zeichnet sich dadurch aus, wenn mehrere erste Messstellen oder mehrere erste Messfenster von der ersten Messvorrichtung ausgebildet werden und die ersten Messstellen oder die ersten Messfenster voneinander beabstandet angeordnet werden. Damit können am Gegenstand an mehreren bevorzugt unterschiedlichen Positionen Messvorgänge durch die Mehrfachanordnung von ersten Messstellen oder ersten Messfenstern durchgeführt werden.

Weiters ist ein Vorgehen vorteilhaft, bei dem mehrere zweite Messstellen oder mehrere zweite Messfenster von der zweiten Messvorrichtung ausgebildet werden und die zweiten Messstellen oder die zweiten Messfenster voneinander beabstandet angeordnet werden. So können auch bei sich im zweiten optischen Erfassungsbereich befindlichen Merkmal am Gegenstand an mehreren zweiten Messstellen oder zweiten Messfenstern bevorzugt gleichzeitig mehrere Messungen durchgeführt werden. Bevorzugt befinden sich die zweiten Messstellen am gleichen Ort oder den gleichen Orten wie die ersten Messstellen oder die ersten Messbereiche am jeweiligen Gegenstand.

Eine weitere vorteilhafte Vorgehensweise ist dadurch gekennzeichnet, dass von der ersten Messvorrichtung bei sich innerhalb des ersten optischen Erfassungsbereichs und außerhalb des Überdeckungsabschnitts befindlichen Merkmal des Gegenstands mehrere Messvorgänge durchgeführt werden. Damit kann eine ständige Überwachung und Kontrolle des Gegenstandes bedingt durch die mehrfachen Messvorgänge erfolgen.

Vorteilhaft ist auch eine Verfahrensvariante, bei welcher von der zweiten Messvorrichtung bei sich innerhalb des Überdeckungsabschnitts oder innerhalb des zweiten optischen Erfassungsbereichs befindlichen Merkmal des Gegenstands mehrere Messvorgänge durchgeführt werden. Damit kann auch eine Weiterverfolgung des Gegenstandes bei sich im zweiten optischen Erfassungsbereich befindlichen Merkmal am Gegenstand durchgeführt werden.

Eine andere Vorgehensweise zeichnet sich dadurch aus, wenn die Verstellbewegung entlang des Verstellwegs geradlinig durchgeführt wird. Durch die Wahl des geradlinig ausgeführten Verstellwegs kann so auch eine einfache koordinierte Mitbewegung der Messstellen oder Messfenster durchgeführt werden.

Weiters ist ein Vorgehen vorteilhaft, bei dem der Gegenstand von einer Steckerbaugruppe gebildet wird, welche ein Rohr, insbesondere für flüssige oder gasförmige Medien, sowie einen mit dem Rohr zu verbindenden oder bereits verbundenen Steckverbinder umfasst. Damit kann insbesondere bei einer Steckerbaugruppe während des Verpressvorgangs die korrekte Durchführung desselben sowie die zueinander korrekte Anordnung von Bauteilen kontrolliert und überwacht werden.

Zum besseren Verständnis der Erfindung wird diese anhand der nachfolgenden Figuren näher erläutert.

Es zeigen jeweils in stark vereinfachter, schematischer Darstellung:
- Fig. 1: ein Fahrzeug, teilweise geschnitten mit einem darin angeordneten, als Steckerbaugruppe ausgebildeten Gegenstand;
- Fig. 2: den als Steckerbaugruppe ausgebildeten Gegenstand, in schaubildlicher Darstellung sowie im Viertelschnitt;
- Fig. 3: den als Steckerbaugruppe ausgebildeten Gegenstand nach den Fig. 1 und 2, im Axialschnitt und einer ersten Stellung des Merkmals innerhalb des ersten Erfassungsbereichs;
- Fig. 4: den Gegenstand nach Fig. 3, im Axialschnitt und einer zweiten Stellung des Merkmals innerhalb des Überdeckungsabschnitts zwischen dem ersten und zweiten Erfassungsbereich;
- Fig. 5: den Gegenstand nach den Fig. 3 und 4, im Axialschnitt und einer dritten Stellung des Merkmals innerhalb des zweiten Erfassungsbereichs.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine zwingende Vorgehensweise darstellen muss.

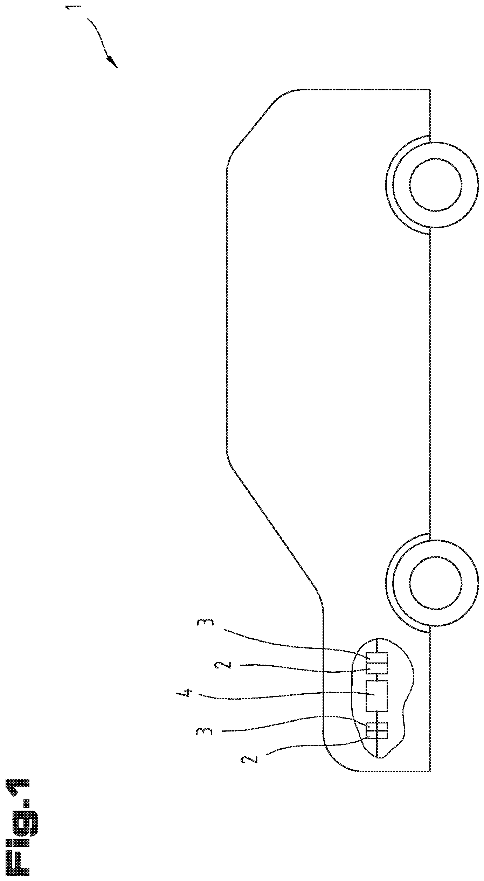

In der Fig. 1 ist in einer schematischen Darstellung ein Fahrzeug 1 mit einer darin verbauten Steckerbaugruppe 2 gezeigt. Bei dem Fahrzeug 1 handelt es sich insbesondere um straßengebundene Kraftfahrzeuge mit einem Verbrennungsmotor. Die Steckerbaugruppe 2 kann z.B. zum Verbinden verschiedener Bauteile der Frischluftzufuhr zum Verbrennungsmotor eingesetzt werden. Beispielsweise kann vorgesehen sein, dass die Steckerbaugruppe 2 mit einem dazu passenden, entsprechenden Gegensteckverbinder 3 zur Verbindung zweier Teile im Ansaugbereich eines Turboladers 4 vorgesehen ist. Weiters kann auch vorgesehen sein, dass auch eine Steckerverbindung mit einer derartigen Steckerbaugruppe 2 in der vom Turbolader 4 abgehenden Druckseite zur Verbindung zweier Bauteile eingesetzt wird.

Bei derartigen Steckerbaugruppen 2 ist aufgrund der hohen Qualitätsanforderungen und der Betriebssicherheit zumeist eine stückweise Qualitätskontrolle durchzuführen.

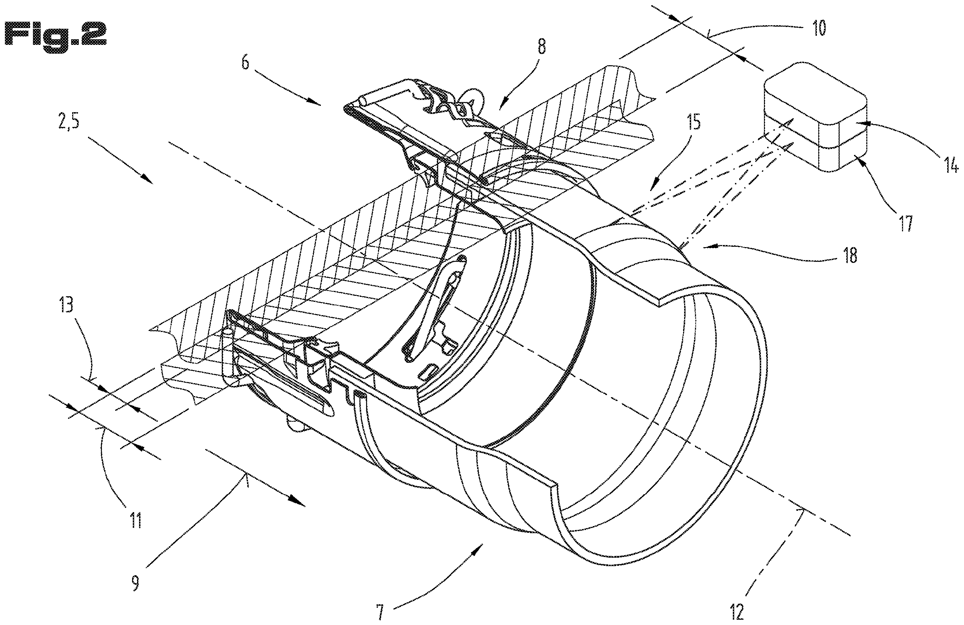

In der Fig. 2 ist die Steckerbaugruppe 2 in einem Viertelschnitt gezeigt und wird nachfolgend allgemein als Gegenstand 5 bezeichnet. Die Steckerbaugruppe 2 umfasst hier einen Steckverbinder 6 sowie ein damit zu verbindendes Rohr 7. Die gegenseitige Verbindung erfolgt zumeist durch einen plastischen Umformvorgang eines Teilabschnitts des Steckverbinders 6, welcher z.B. mittels eines Tiefziehvorgangs aus einem metallischen Werkstoff hergestellt werden kann. Dies erfolgt bevorzugt aus einem ebenflächigen Blech.

Um die unterschiedlichsten Messvorgänge vor dem Umform- und Verbindungsvorgang des Gegenstands 5, insbesondere dessen Steckverbinders 6, und/oder während und/oder nachfolgend daran durchführen zu können, ist eine positionierte Ausrichtung der Messstelle oder den Messstellen relativ bezüglich des Gegenstands 5, insbesondere des Steckverbinders 6, durchzuführen. Dies wird nachfolgend näher beschrieben und ist insbesondere dann durchzuführen, wenn der Gegenstand 5 mehrere sogenannte Störkonturen im Nahbereich eines vorbestimmten Merkmals aufweist. Das zu erfassende oder zu erkennende Merkmal soll zwar als markant ausgewählt sein, kann aber z.B. durch benachbarte Störkonturen nicht gut erkennbar sein, wodurch das optische Erfassen und detektieren fehlerbehaftet sein kann. Da das nachfolgend beschriebene Verfahren auch bei anderen Gegenständen 5, welche keine Steckerbaugruppe 2 bilden, angewendet werden kann, ist die Steckerbaugruppe 2 nur als Beispiel herangezogen worden, um eine mögliche konkrete Anwendung beschreiben zu können und ist das Verfahren nicht zwingend auf dieses Bauteil beschränkt. Das Erkennen und Erfassen zumindest eines Merkmals und die anschließend damit verbundenen Messvorgänge kann auch als Positionskorrektur bezeichnet werden.

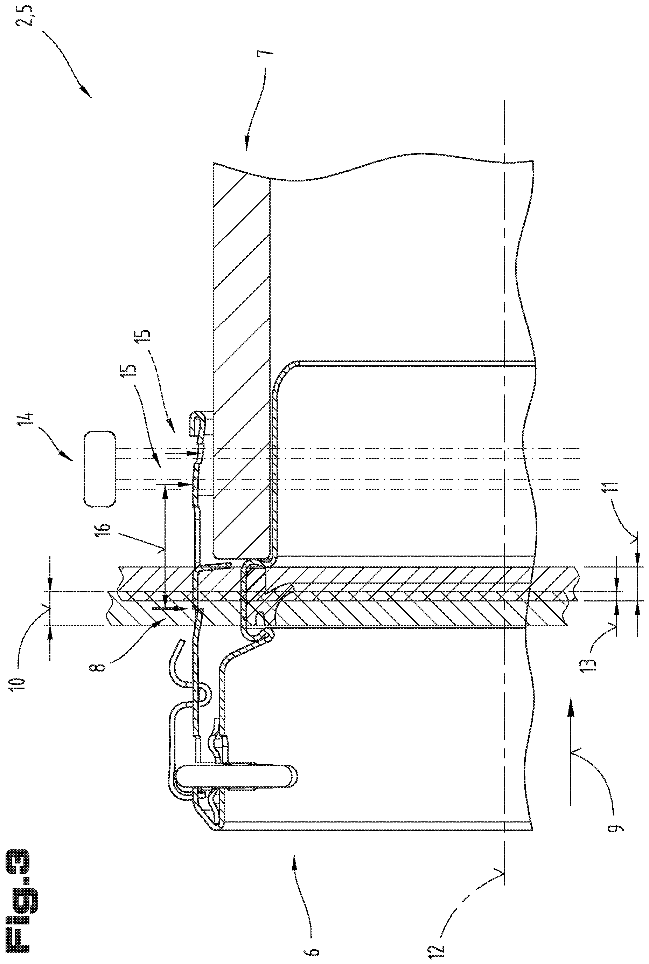

In den Fig. 3 bis 5 ist ein möglicher Verfahrensablauf gezeigt, bei welchem an dem Gegenstand 5, hier der Steckerbaugruppe 2, die einzelnen Verfahrensschritte gezeigt und beschrieben sind.

Bei diesem Verfahren wird davon ausgegangen, dass der Gegenstand 5 zumindest ein Merkmal 8 aufweist, welches mittels optischer Messtechnik erfasst und in einem bildverarbeitenden System als dieses erkannt wird. Diese Technologie ist hinlänglich bekannt und wird deshalb nicht näher darauf eingegangen. Um eine dauerhafte Verfolgung und stabile Erkennung des Merkmals 8 sicherzustellen, wird der nachfolgend beschriebene Verfahrensablauf und die damit verbundenen Schritte gewählt.

Der Gegenstand 5 wird entlang eines Verstellwegs mit einer durch einen Pfeil eingetragenen Verstellrichtung 9 bewegt, wobei diese Bewegung z.B. durch einen Verpressvorgang des Steckverbinders 6 mit dem Rohr 7 oder anderwärtig erfolgen kann. Dabei kann die Verstellbewegung entlang des Verstellwegs geradlinig erfolgen. Die Verstellrichtung 9 des Gegenstands 5 erfolgt bevorzugt in eingetragener Pfeilrichtung.

Zur Erfassung und Erkennung des am Gegenstand 5, hier am Steckverbinder 6 der Steckerbaugruppe 2, zuvor festgelegten oder vorbestimmten örtlich feststehenden Merkmals 8, wird zumindest ein erster optischer Erfassungsbereich 10 und zumindest ein zweiter optischer Erfassungsbereich 11 ausgebildet. Die beiden Erfassungsbereiche 10, 11 sind jeweils durch einen Streifen mit jeweils beidseitigen Begrenzungslinien dargestellt. Die Erfassungsbereiche 10, 11 können in einer normalen Ausrichtung bezüglich einer Längsachse 12 des Gegenstands 5 oder der eingetragenen Verstellrichtung 9 verlaufend angeordnet sein. Auf die Darstellung der jeweiligen Messeinheiten, von welchen die Erfassungsbereiche 10, 11 ausgebildet oder definiert werden, wurde der besseren Übersichtlichkeit halber verzichtet.

Der zumindest eine zweite optische Erfassungsbereich 11 ist dem zumindest einen ersten optischen Erfassungsbereich 10 in Bewegungsrichtung des Gegenstandes 5 gemäß eingetragener Verstellrichtung 9 nachgeordnet. In diesem Fall ist die Bewegungsrichtung der Verstellrichtung 9 gleichzusetzen. Der zumindest eine erste optische Erfassungsbereich 10 und der zumindest eine zweite optische Erfassungsbereich 11 sind einander bereichsweise überdeckend angeordnet. Damit wird zwischen diesen ein Überdeckungsabschnitt 13 ausgebildet. Der Überdeckungsabschnitt 13 ist mit einer Kreuzschraffur dargestellt und ist Bestandteil beider optischer Erfassungsbereiche 10 und 11. Die optischen Erfassungsbereiche 10, 11 sowie der zwischen diesen ausgebildete Überdeckungsabschnitt 13 dienen zur Erfassung und Ermittlung der aktuelle Ist Lage des am Gegenstand 5 festgelegten Merkmals 8.

Im vorliegenden Beispiel ist die Verstellrichtung 9 von links nach rechts gewählt. Das zu erfassende Merkmal 8 gelangt während der Verstellbewegung des Gegenstands 5 zuerst in den ersten optischen Erfassungsbereich 10. Damit kann die Ist Lage des Merkmals 8 mittels der zuvor beschriebenen Messeinheit z.B. in einem Koordinatensystem eindeutig bestimmt werden.

Von einer ersten Messvorrichtung 14 wird zumindest eine erste Messstelle 15, welche auch als Messfenster bezeichnet werden kann, ausgebildet oder definiert. Die Anordnung und Positionierung der zumindest einen ersten Messstelle 15 erfolgt in einem vorbestimmten fixen ersten Abstand 16 von der aktuell ermittelten Ist Lage des am Gegenstand 5 festgelegten Merkmals 8. Damit ist die zumindest eine erste Messstelle 15 in dem vorbestimmten ersten Abstand 16 von dem aktuell erfassten Merkmal 8 beabstandet angeordnet. So kann stets der korrekte Messort am Gegenstand 5 ermittelt und aufgefunden werden. Ist die Positionierung der ersten Messstelle 15 erfolgt, kann mittels der ersten Messvorrichtung 14 zumindest ein Messvorgang durchgeführt werden. In der Fig. 3 ist zu ersehen, dass sich das Merkmal 8 noch innerhalb des ersten optischen Erfassungsbereichs 10 befindet.

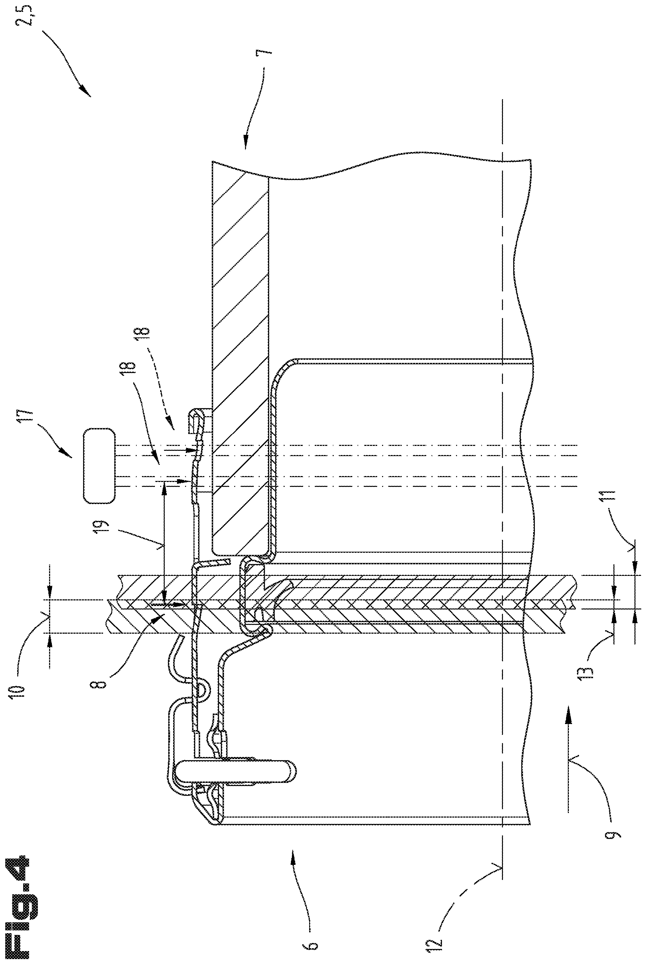

In der Fig. 4 ist gezeigt, dass der Gegenstand 5 mitsamt dem ausgewählten Merkmal 8 weiter entlang des Verstellwegs in Verstellrichtung 9 bewegt worden ist. Nun befindet sich das Merkmal 8 im oder innerhalb des Überdeckungsabschnitts 13 zwischen den beiden optischen Erfassungsbereichen 10 und 11.

Für die weitere Durchführung von Messungen am Gegenstand 5 ist zumindest eine zweite Messvorrichtung 17 vorgesehen, von welcher zumindest eine zweite Messstelle 18 ausgebildet oder definiert wird. Die zweite Messstelle 18 kann auch als zweites Messfenster bezeichnet werden. Es ist auch hier wiederum vorgesehen, dass die zumindest eine zweite Messstelle 18 in einem vorbestimmten fixen zweiten Abstand 19 bezüglich des am Gegenstand 5 festgelegten Merkmals 8 angeordnet wird. Um eine exakte Messung an der zumindest einen zweiten Messstelle 18 durchführen zu können, wird die erste Messvorrichtung 14 und damit auch die zumindest eine erste Messstelle 15 deaktiviert. Die Durchführung zumindest eines weiteren Messvorgangs erfolgt mittels der zweiten Messvorrichtung 17 an deren zumindest einen zweiten Messstelle 18.

Die Messstellen 15, 18 stellen jeweils einen exakt positioniert ausgerichteten Messort am Gegenstand 5 dar. So kann z.B. an der oder den Messstellen 15, 18 eine Abmessung, das Vorhandensein eines Bauteils oder der Abstand zwischen zwei Bauteilen oder dergleichen ermittelt werden. Dabei können die unterschiedlichsten Messverfahren und/oder Messmittel eingesetzt werden. Bevorzugt werden berührungslose Messmittel wie z.B. 2D Laserscanner, 3D Laserscanner, Vision-Sensor oder Kamerasysteme eingesetzt. Vision-Sensoren können z.B. die Ausrichtung von Bauteilen, Merkmale oder die Beschaffenheit von Bauteilen durch Bildvergleiche prüfen.

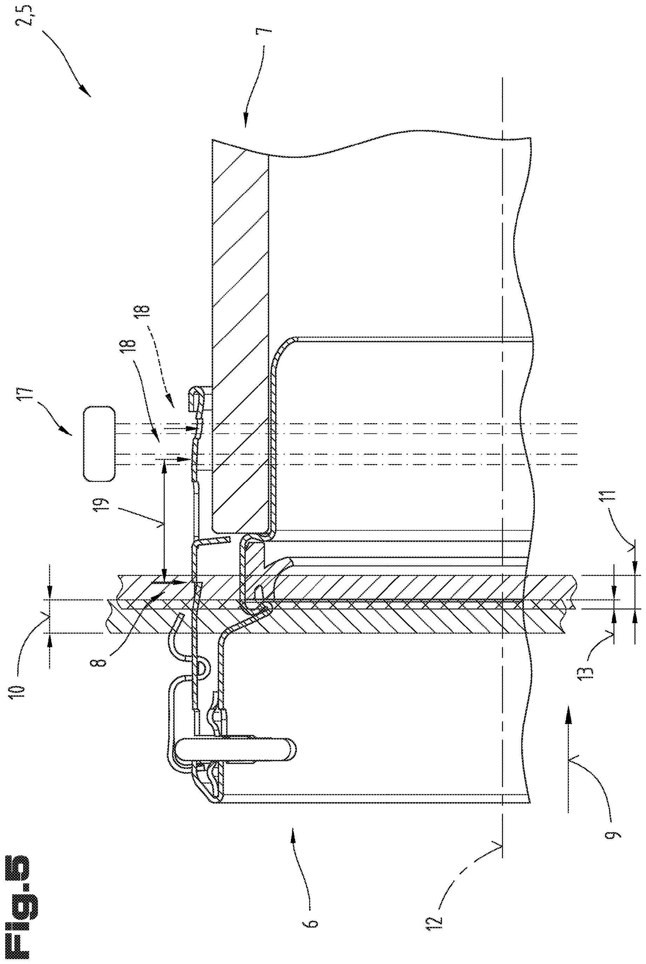

In der Fig. 5 ist noch dargestellt, dass sich das Merkmal 8 ausschließlich innerhalb des zweiten optischen Erfassungsbereichs 11 befindet und von der zweiten Messvorrichtung 17 nun die Messung an der zumindest einen exakt positioniert ausgerichteten zweiten Messstelle 18 durchgeführt wird.

Ist das Merkmal 8 in keinem der optischen Erfassungsbereiche 10, 11, können die beiden Messvorrichtungen 14, 17 deaktiviert werden. Dadurch können auch keinerlei Messvorgänge mehr durchgeführt werden, da der Bezug zum Merkmal 8 fehlt.

Die Messeinheiten, welche die optischen Erfassungsbereiche 10, 11 ausbilden oder definieren, stehen mit den Messvorrichtungen 14, 17, gegebenenfalls unter Zwischenschaltung einer Steuerungsvorrichtung, in Kommunikationsverbindung.

Weiters kann vorgesehen sein, dass der vorbestimmte fixe erste Abstand 16 als auch der vorbestimmte fixe zweite Abstand 19 am Beginn des Erfassungsvorgangs bezüglich des am Gegenstand 5 festgelegten Merkmals 8 zueinander gleich ausgewählt werden. Damit können beide Messvorrichtungen 14, 17 stets gleich mitbewegt werden, wobei deren Aktivierung und/oder Deaktivierung in Abhängigkeit von der aktuellen Ist Lage des Merkmals 8 erfolgt.

Die zumindest eine erste Messstelle 15 oder das zumindest eine erste Messfenster soll bevorzugt während der Verstellbewegung entlang des Verstellwegs ständig in dem vorbestimmten fixen ersten Abstand 16 von dem am Gegenstand 5 festgelegten Merkmal 8 mitbewegt werden. Damit können jederzeit in Abhängigkeit vom jeweiligen Aktivierungszustand Messungen durchgeführt werden. Gleiches kann aber auch für die zumindest eine zweite Messstelle 18 oder das zumindest eine zweite Messfenster gelten.

Um auch an mehreren Orten oder Stellen am Gegenstand 5 Messungen durchführen zu können, können mehrere erste Messstellen 15 oder mehrere erste Messfenster von der ersten Messvorrichtung 14 ausgebildet oder definiert werden. Bevorzugt werden die ersten Messstellen 15 oder die ersten Messfenster voneinander beabstandet angeordnet. Dies ist in der Fig. 3 angedeutet.

Es wäre aber auch noch möglich, dass mehrere zweite Messstellen 18 oder mehrere zweite Messfenster von der zweiten Messvorrichtung 17 ausgebildet oder definiert werden, welche bevorzugt voneinander beabstandet angeordnet werden können. Dies ist in den Fig. 4 und 5 angedeutet.

Während der Fortbewegung des Gegenstands 5 entlang des zumeist vorbestimmten Verstellwegs können von der ersten Messvorrichtung 14 bei sich noch innerhalb des ersten optischen Erfassungsbereichs 10 befindlichen, jedoch noch außerhalb des Überdeckungsabschnitts 13 befindlichen Merkmal 8 des Gegenstands 5, mehrere Messvorgänge durchgeführt werden.

Befindet sich das Merkmal 8 schon innerhalb des Überdeckungsabschnitts 13 oder innerhalb des zweiten optischen Erfassungsbereichs 11, können auch von der zweiten Messvorrichtung 17 mehrere Messvorgänge durchgeführt werden.

Die jeweils bei den Messvorgängen ermittelten Messergebnisse können an eine Steuerungsvorrichtung und/oder an eine Regelungsvorrichtung übertragen oder weitergeleitet werden. In einem Speichermedium können in Abhängigkeit vom jeweiligen Gegenstand 5 das dazugehörige Messergebnis oder die dazugehörigen Messergebnisse abgespeichert werden.

Weiters wäre es noch möglich, mehrere der Erfassungsbereiche vorzusehen und diese miteinander zu verketten.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Fahrzeug
- 2: Steckerbaugruppe
- 3: Gegensteckverbinder
- 4: Turbolader
- 5: Gegenstand
- 6: Steckverbinder
- 7: Rohr
- 8: Merkmal
- 9: Verstellrichtung
- 10: erster Erfassungsbereich
- 11: zweiter Erfassungsbereich
- 12: Längsachse
- 13: Überdeckungsabschnitt
- 14: erste Messvorrichtung
- 15: erste Messstelle
- 16: erster Abstand
- 17: zweite Messvorrichtung
- 18: zweite Mess stelle
- 19: zweiter Abstand

## Patentansprüche

1. Verfahren zur Positionierung zumindest einer ersten Messstelle (15) oder eines ersten Messfensters einer ersten Messvorrichtung (14) bezüglich eines an einem Gegenstand (5) örtlich festgelegten Merkmals (8), und dabei der Gegenstand (5) samt dem daran festgelegten örtlichen Merkmal (8) entlang eines Verstellwegs bewegt wird, wobei folgende Schritte durchgeführt werden:
- Ausbilden zumindest eines ersten optischen Erfassungsbereichs (10), mittels welchem zumindest einen ersten optischen Erfassungsbereich (10) die aktuelle Ist Lage des am Gegenstand (5) festgelegten Merkmals (8) innerhalb des zumindest einen ersten optischen Erfassungsbereichs (10) erfasst wird,
- positioniertes Anordnen der zumindest einen ersten Messstelle (15) oder des zumindest einen ersten Messfensters in einem vorbestimmten fixen ersten Abstand (16) bezüglich der aktuell ermittelten Ist Lage des am Gegenstand (5) festgelegten Merkmals (8),
- Durchführen zumindest eines Messvorgangs am Gegenstand (5) an der zuvor positionierten zumindest einen ersten Messstelle (15) oder dem zuvor positionierten zumindest einen ersten Messfenster mittels der ersten Messvorrichtung (14),
wobei
- zumindest ein zweiter optischer Erfassungsbereich (11) ausgebildet wird,
- der zumindest eine zweite optische Erfassungsbereich (11) dem zumindest einen ersten optischen Erfassungsbereich (10) in Bewegungsrichtung des Gegenstandes (5) nachgeordnet wird,
- der zumindest eine erste optische Erfassungsbereich (10) und der zumindest eine zweite optische Erfassungsbereich (11) einander überdeckend angeordnet werden und dabei zwischen diesen ein Überdeckungsabschnitt (13) ausgebildet wird,
- eine zweite Messvorrichtung (17) mit zumindest einer zweiten Messstelle (18) oder mit zumindest einem zweiten Messfenster bereitgestellt wird und die zumindest eine zweite Messstelle (18) oder das zumindest eine zweite Messfenster in einem vorbestimmten fixen zweiten Abstand (19) bezüglich des am Gegenstand (5) festgelegten Merkmals (8) angeordnet wird,
- beim Erfassen der Ist Lage des am Gegenstand (5) festgelegten Merkmals (8) innerhalb des Überdeckungsabschnitts (13) zwischen dem zumindest einen ersten optischen Erfassungsbereich (10) und dem zumindest einen zweiten optischen Erfassungsbereich (11) die erste Messvorrichtung (14) mit deren zumindest einen ersten Messstelle (15) oder deren zumindest einen ersten Messfenster deaktiviert wird und - ein weiterer Messvorgang am Gegenstand (5) an der zuvor positionierten zumindest einen zweiten Messstelle (18) oder dem zuvor positionierten zumindest einen zweiten Messfenster mittels der zweiten Messvorrichtung (17) durchgeführt wird.

2. Verfahren nach Anspruch 1, wobei der vorbestimmte fixe erste Abstand (16) als auch der vorbestimmte fixe zweite Abstand (19) am Beginn des Erfassungsvorgangs bezüglich des am Gegenstand (5) festgelegten Merkmals (8) zueinander gleich ausgewählt werden.

3. Verfahren nach Anspruch 1 oder 2, wobei die zumindest eine erste Messstelle (15) oder das zumindest eine erste Messfenster während der Verstellbewegung entlang des Verstellwegs ständig in dem vorbestimmten fixen ersten Abstand (16) von dem am Gegenstand (5) festgelegten Merkmal (8) mitbewegt wird.

4. Verfahren nach einem der vorhergehenden Ansprüche, wobei die zumindest eine zweite Messstelle (18) oder das zumindest eine zweite Messfenster während der Verstellbewegung entlang des Verstellwegs ständig in dem vorbestimmten fixen zweiten Abstand (19) von dem am Gegenstand (5) festgelegten Merkmal (8) mitbewegt wird.

5. Verfahren nach einem der vorhergehenden Ansprüche, wobei mehrere erste Messstellen (15) oder mehrere erste Messfenster von der ersten Messvorrichtung (14) ausgebildet werden und die ersten Messstellen (15) oder die ersten Messfenster voneinander beabstandet angeordnet werden.

6. Verfahren nach einem der vorhergehenden Ansprüche, wobei mehrere zweite Messstellen (18) oder mehrere zweite Messfenster von der zweiten Messvorrichtung (17) ausgebildet werden und die zweiten Messstellen (18) oder die zweiten Messfenster voneinander beabstandet angeordnet werden.

7. Verfahren nach einem der vorhergehenden Ansprüche, wobei von der ersten Messvorrichtung (14) bei sich innerhalb des ersten optischen Erfassungsbereichs (10) und außerhalb des Überdeckungsabschnitts (13) befindlichen Merkmal (8) des Gegenstands (5) mehrere Messvorgänge durchgeführt werden.

8. Verfahren nach einem der vorhergehenden Ansprüche, wobei von der zweiten Messvorrichtung (17) bei sich innerhalb des Überdeckungsabschnitts (13) oder innerhalb des zweiten optischen Erfassungsbereichs (11) befindlichen Merkmal (8) des Gegenstands (5) mehrere Messvorgänge durchgeführt werden.

9. Verfahren nach einem der vorhergehenden Ansprüche, wobei die Verstellbewegung entlang des Verstellwegs geradlinig durchgeführt wird.

10. Verfahren nach einem der vorhergehenden Ansprüche, wobei der Gegenstand (5) von einer Steckerbaugruppe (2) gebildet wird, welche ein Rohr (7), insbesondere für flüssige oder gasförmige Medien, sowie einen mit dem Rohr (7) zu verbindenden Steckverbinder (6) umfasst.

## Claims

1. A method for positioning at least one first measurement point (15) or one first measuring window of a first measuring device (14) with respect to a feature (8) locationally fixed on an object (5), while the object (5) along with the feature (8) locationally fixed thereon is moved along an adjustment track, wherein the following steps are carried out:
- forming at least one first optical detection region (10), the current actual position of the feature (8) fixed on the object (5) within the at least one first optical detection region (10) being detected by means of said at least one first optical detection region (10),
- positioned arrangement of the at least one first measurement point (15) or the at least one first measuring window at a predefined fixed first distance (16) with respect to the currently determined actual position of the feature (8) fixed on the object (5),
- carrying out at least one measuring operation on the object (5) at the previously positioned at least one first measurement point (15) or the previously positioned at least one first measuring window by means of the first measuring device (14),
wherein
- at least one second optical detection region (11) is formed,
- the at least one second optical detection region (11) is arranged behind the at least one first optical detection region (10) in the direction of movement of the object (5),
- the at least one first optical detection region (10) and the at least one second optical detection region (11) are arranged so as to overlap one another and hence an overlapping section (13) is formed between these,
- a second measuring device (17) having at least one second measurement point (18) or having at least one second measuring window is provided and the at least one second measurement point (18) or the at least one second measuring window is arranged at a predefined fixed second distance (19) with respect to the feature (8) fixed on the object (5),
- during detection of the actual position of the feature (8) fixed on the object (5) within the overlapping section (13) between the at least one first optical detection region (10) and the at least one second optical detection region (11), the first measuring device (14) with its at least one first measurement point (15) or its at least one first measuring window is deactivated, and
- one further measuring operation is carried out on the object (5) at the previously positioned at least one second measurement point (18) or the previously positioned at least one second measuring window by means of the second measuring device (17).

2. The method according to claim 1, wherein the predefined fixed first distance (16) as well as the predefined fixed second distance (19) are selected to be equal to each other with respect to the feature (8) fixed on the object (5) at the beginning of the detecting operation.

3. The method according to claim 1 or 2, wherein the at least one first measurement point (15) or the at least one first measuring window is continuously moved along at the predefined fixed first distance (16) from the feature (8) fixed on the object (5) during the adjustment movement along the adjustment track.

4. The method according to one of the preceding claims, wherein the at least one second measurement point (18) or the at least one second measuring window is continuously moved along at the predefined fixed second distance (19) from the feature (8) fixed on the object (5) during the adjustment movement along the adjustment track.

5. The method according to one of the preceding claims, wherein multiple first measurement points (15) or multiple first measuring windows are formed by the first measuring device (14) and the first measurement points (15) or the first measuring windows are arranged so as to be spaced from one another.

6. The method according to one of the preceding claims, wherein multiple second measurement points (18) or multiple second measuring windows are formed by the second measuring device (17) and the second measurement points (18) or the second measuring windows are arranged so as to be spaced from one another.

7. The method according to one of the preceding claims, wherein multiple measuring operations are carried out by the first measuring device (14) when the feature (8) of the object (5) is located within the first optical detection region (10) and outside of the overlapping section (13).

8. The method according to one of the preceding claims, wherein multiple measuring operations are carried out by the second measuring device (17) when the feature (8) of the object (5) is located within the overlapping section (13) or within the second optical detection region (11).

9. The method according to one of the preceding claims, wherein the adjustment movement along the adjustment track is carried out in a straight line.

10. The method according to one of the preceding claims, wherein the object (5) is formed by a plug assembly (2) comprising a pipe (7), in particular for liquid or gaseous media, as well as a plug connector (6) to be connected to the pipe (7).

## Revendications

1. Procédé permettant de positionner au moins un premier point de mesure (15) ou une première fenêtre de mesure d'un premier dispositif de mesure (14) par rapport à une caractéristique (8) fixée localement sur un objet (5), et en l'occurrence l'objet (5), conjointement à la caractéristique (8) qui y est définie localement, est déplacé le long d'une course de déplacement, les étapes suivantes étant réalisées :
- constitution d'au moins une première zone de détection (10) optique, au moyen de laquelle au moins une première zone de détection (10) optique la position effective actuelle de la caractéristique (8) fixée sur l'objet (5) est détectée à l'intérieur de l'au moins une première zone de détection (10) optique,
- disposition positionnée de l'au moins un premier point de mesure (15) ou de l'au moins une première fenêtre de mesure à une première distance (16) fixe prédéfinie par rapport à la position effective actuellement déterminée de la caractéristique (8) fixée sur l'objet (5),
- réalisation d'au moins un processus de mesure sur l'objet (5) au niveau de l'au moins un premier point de mesure (15) positionné auparavant ou au niveau de l'au moins une première fenêtre de mesure positionnée auparavant au moyen du premier dispositif de mesure (14),
- au moins une deuxième zone de détection (11) optique étant constituée,
- l'au moins une deuxième zone de détection (11) optique étant disposée en aval de l'au moins une première zone de détection (10) optique dans le sens du mouvement de l'objet (5),
- l'au moins une première zone de détection (10) optique et l'au moins une deuxième zone de détection (11) optique étant disposées en chevauchement l'une avec l'autre, et en l'occurrence un tronçon de chevauchement (13) est constitué entre celles-ci,
- un deuxième dispositif de mesure (17) avec au moins un deuxième point de mesure (18) ou avec au moins une deuxième fenêtre de mesure étant fourni, et l'au moins un deuxième point de mesure (18) ou l'au moins une deuxième fenêtre de mesure est disposé(e) à une deuxième distance (19) fixe prédéfinie par rapport à la caractéristique (8) fixée sur l'objet (5),
- lors de la détection de la position effective de la caractéristique (8) fixée sur l'objet (5) à l'intérieur du tronçon de chevauchement (13) entre l'au moins une première zone de détection (10) optique et l'au moins une deuxième zone de détection (11) optique, le premier dispositif de mesure (14) avec son au moins un premier point de mesure (15) ou son au moins une première fenêtre de mesure est désactivé et
- un autre processus de mesure est effectué au moyen du deuxième dispositif de mesure (17) sur l'objet (5) au niveau de l'au moins un deuxième point de mesure (18) positionné auparavant ou au niveau de l'au moins une deuxième fenêtre de mesure positionnée auparavant.

2. Procédé selon la revendication 1, la première distance (16) fixe prédéfinie ainsi que la deuxième distance (19) fixe prédéfinie étant, au début du processus de détection, sélectionnées de façon égale entre elles par rapport à la caractéristique (8) fixée sur l'objet (5).

3. Procédé selon la revendication 1 ou 2, l'au moins un premier point de mesure (15) ou l'au moins une première fenêtre de mesure étant, pendant le mouvement de déplacement le long de la course de déplacement, déplacé(e) solidairement constamment à la première distance (16) fixe prédéfinie par rapport à la caractéristique (8) fixée sur l'objet (5).

4. Procédé selon l'une des revendications précédentes, l'au moins un deuxième point de mesure (18) ou l'au moins une deuxième fenêtre de mesure étant, pendant le mouvement de déplacement le long de la course de déplacement, déplacé(e) solidairement constamment à la deuxième distance (19) fixe prédéfinie par rapport à la caractéristique (8) fixée sur l'objet (5).

5. Procédé selon l'une des revendications précédentes, plusieurs premiers points de mesure (15) ou plusieurs premières fenêtres de mesure du premier dispositif de mesure (14) étant constitué(e)s, et les premiers points de mesure (15) ou les premières fenêtres de mesure étant disposé(e)s à distance les un(e)s des autres.

6. Procédé selon l'une des revendications précédentes, plusieurs deuxièmes points de mesure (18) ou plusieurs deuxièmes fenêtres de mesure du deuxième dispositif de mesure (17) étant constitué(e)s, et les deuxièmes points de mesure (18) ou les deuxièmes fenêtres de mesure étant disposé(e)s à distance les un(e)s des autres.

7. Procédé selon l'une des revendications précédentes, plusieurs processus de mesure étant effectués par le premier dispositif de mesure (14) quand la caractéristique (8) de l'objet (5) est située à l'intérieur de la première zone de détection (10) optique et à l'extérieur du tronçon de chevauchement (13).

8. Procédé selon l'une des revendications précédentes, plusieurs processus de mesure étant effectués par le deuxième dispositif de mesure (17) quand la caractéristique (8) de l'objet (5) est située à l'intérieur du tronçon de chevauchement (13) ou à l'intérieur de la deuxième zone de détection (11) optique.

9. Procédé selon l'une des revendications précédentes, le mouvement de déplacement le long de la course de déplacement étant effectué de façon rectiligne.

10. Procédé selon l'une des revendications précédentes, l'objet (5) étant formé d'un ensemble connecteur (2) qui comprend un tube (7), en particulier pour des milieux liquides ou gazeux, ainsi qu'un connecteur (6) devant être raccordé au tube (7).
